Europäisches Patentamt

European Patent Office

Office européen des brevets

(11) Publication number: **0 302 960**
**A1**

## (12) EUROPEAN PATENT APPLICATION

(21) Application number: 87111755.2

(51) Int. Cl.⁴: **B01D 13/00**

(22) Date of filing: 13.08.87

(43) Date of publication of application:
**15.02.89 Bulletin 89/07**

(84) Designated Contracting States:
**DE FR GB IT NL**

(71) Applicant: **Bintech (Proprietary) Limited**
**Oosterland Street**
**Daljosafat Paarl 7620(ZA)**

(72) Inventor: **Barnard, Johan Pieter**
**7 Marais Street**
**Wellington 7655(ZA)**
Inventor: **Molnar, Otto, Dr.**
**50 Firmount Road**
**Somerset West 7130(ZA)**
Inventor: **Hattingh, Pieter Anthon**
**24 Aurora Street**
**Denneberg Paarl 7620(ZA)**

(74) Representative: **Tetzner, Volkmar, Dr.-Ing. Dr. jur.**
**Van-Gogh-Strasse 3**
**D-8000 München 71(DE)**

(54) Membrane tube assembly.

(57) A membrane tube assembly is provided, which includes a tubular housing (12); membrane tubes (26); two end discs (28) located some distance from each end of the housing (12) so that the membrane tubes (26) project outwardly through holes provided in the end discs (28); and support means (24) for the membrane tubes (26) in the housing. The assembly further has an inlet tube (14.1, 50), an outlet tube (16.1, 50) and a draining tube (58, 60). Tubular connector bends (30) are fitted over the open ends of the membrane tubes (26) for joining the membrane tubes (26) into a continuous elongated passage. Two removable tubular bushes (32) are located in each end of the housing (12). A resin casting (48) is cast into each bush (32) and embeds the connector bends (30) and parts of the membrane tubes (26) projecting beyond that end's end disc (28), and is locked removably in position by locking means (20, 22).

FIG.2

## FIELD OF INVENTION

The present invention relates to membrane tube assemblies.

More particularly, the invention relates to closure members for end caps of membrane tube assemblies.

## BACKGROUND TO INVENTION

The closure member for end caps of membrane tube assemblies in accordance with the invention relates in particular to membrane tube assemblies or units utilized in reverse osmosis systems. Such systems include a tubular housing with a number of semi-permeable membrane tubes, which are spaced apart and are supported by a stack of individual discs provided in face-to-face relationship in the tubular housing.

One suggestion has been to join the end or elbow joining connector pipes of the various tubes by encasing them in a hardened cast medium, such as epoxy resin, to form an end cap casting at each end of the tubular housing. This resin is provided in a grooved end section of the tubular housing. For removing the individual membrane tubes, the end cap castings have to be drilled out and thereafter the tubes can be removed and the tubular housing can be re-used.

A problem with the existing system is that, for preparing the assembly for re-use, the epoxy castings have to be machined out of the tubular housing. This is a relatively expensive operation and at times the grooved section of the tubular housing is damaged during such machining and/or removal of the resin castings.

Another problem is that the wall thickness of the tubular housing must be adequate to allow for the cutting of the grooves to lock the epoxy castings to the tubular housing.

It is an object of the invention to suggest an end cap assembly, which will assist in overcoming these problems.

## SUMMARY OF INVENTION

According to the invention, a membrane tube assembly includes a tubular housing; a number of membrane tubes suitably located in the housing; two end discs with holes, one of each being located some distance from each end of the tubular housing so that the membrane tubes project outwardly through holes provided in both the end discs; support means for the membrane tubes in the tubular housing (eg. support discs with holes for receiving the membrane tubes and packed face to face in the tubular housing); an inlet tube leading into at least one membrane tube; an outlet tube leading into at least one other membrane tube; a number of tubular connector bends fitted over the open ends of the membrane tubes for joining the membrane tubes into a continuous elongated passage from each inlet tube to its associated outlet tube; and a draining tube connected to the tubular housing and leading into the inner space of the tubular housing outside of the membrane tubes, characterized thereby that it further includes two removable tubular bushes, one of each being located in each end of the tubular housing and abutting against that end's end disc; a resin casting cast into each tubular bush against that end's end disc for embedding the connector bends and parts of the membrane tubes projecting beyond that end's end disc; and locking means for locking each tubular bush removably to the tubular housing.

The locking means may be provided as at least one annular groove provided internally in the tubular housing and being adapted to receive a circlip for abutting against the end of the tubular bush located in the housing and facing away from the membrane tubes.

A further annular groove may be provided in either both the tubular bushes or the tubular housing or both, the or each groove being adapted to receive at least one sealing ring, such as an O-ring.

Each tubular bush may be threaded or serrated internally for locating the resin casting therein.

Yet further according to the invention, a membrane tube assembly includes a tubular housing; a number of membrane tubes suitably located in the housing; two end discs with holes, one of each being located some distance away from each end of the tubular housing so that the membrane tubes project outwardly through holes provided in both the end discs; support means for the membrane tubes in the tubular housing (eg. support discs with holes for receiving the membrane tubes and packed face to face in the tubular housing); an inlet tube leading into at least one membrane tube; an outlet tube leading into at least one other membrane tube; a number of tubular connector bends fitted over the open ends of the membrane tubes for joining the membrane tubes into a continuous elongated passage from each inlet tube to its associated outlet tube; suitable closing means at one end of the housing to close off the connector bends and parts of the membrane tubes projecting beyond that end's end disc; and a draining tube connected to the tubular housing and leading into the inner space of the tubular housing outside of the membrane tubes, characterized thereby that it further includes a removable tubular bush, which removable tubular bush is located in the other end of the tubular housing and abuts against that end's end disc; a resin casting cast into the tubular bush against that end's end disc for embedding the connector bends and parts of the membrane tubes projecting beyond that end's end disc; and locking means for locking the tubular bush removably to the tubular housing.

## BRIEF DESCRIPTION OF DRAWINGS

The invention will now be described by way of example with reference to the accompanying schematic drawings.

In the drawings there is shown in

**Figure 1** a side view of a membrane tube assembly for use as a reverse osmosis module or unit in accordance with the invention;

**Figure 2** on a larger scale, a sectional side view of one end of a unit as illustrated in Figure 1;

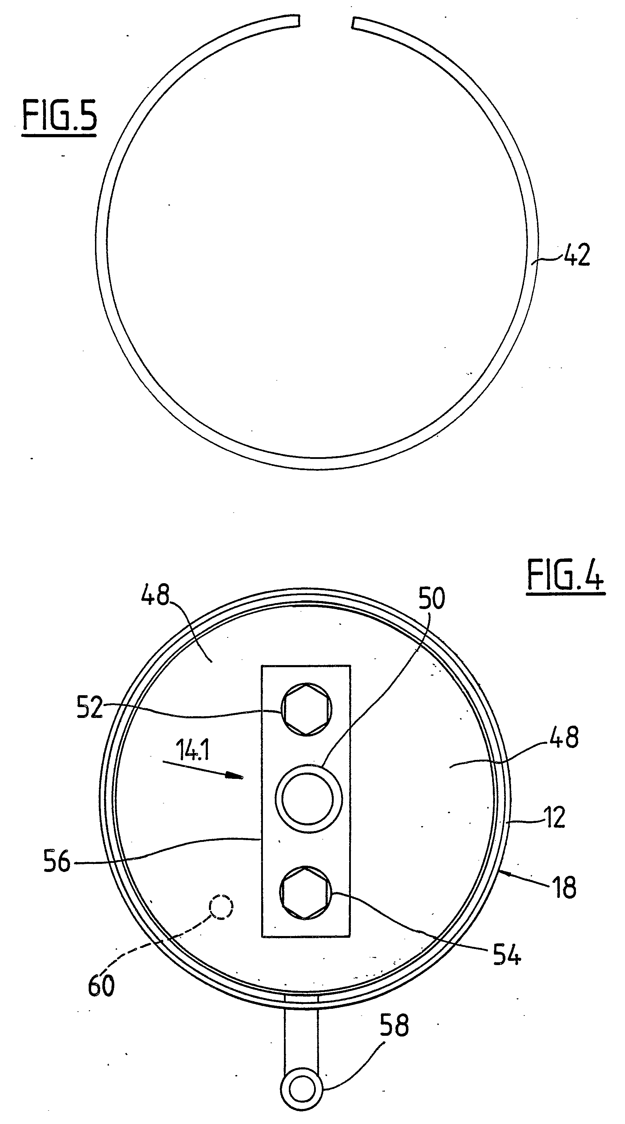

**Figure 3** on an even larger larger scale, a sectional detail of the recess or groove provided in the tubular housing of the membrane tube assembly;

**Figure 4** an end view seen along arrow IV in Figure 2;

**Figure 5** an end view of a circlip used in the unit; and

**Figure 6** an end view of a disc.

## DETAILED DESCRIPTION OF DRAWINGS

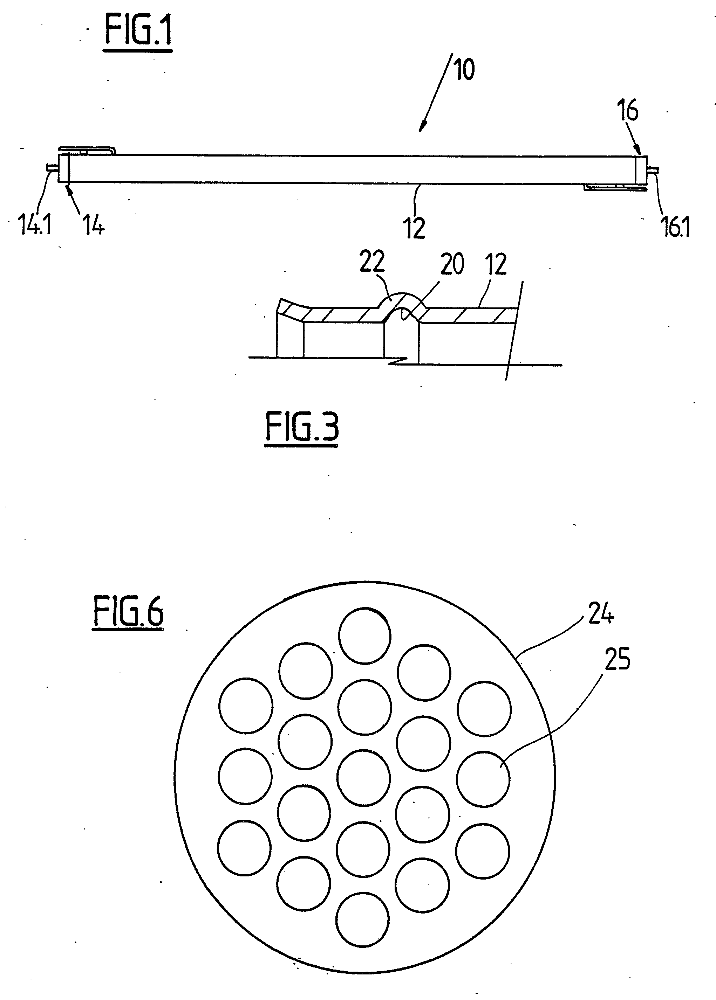

Referring to Figure 1, the membrane tube assembly for use as a reverse osmosis membrane tube unit, generally indicated by reference numeral 10, includes a tubular housing 12 in which a number of membrane tubes are fitted (details of the tubes being described hereinafter). The ends 14 and 16 are closed off by means of end cap assemblies, which also are described hereinafter.

At the end 14 an inlet 14.1 and at the end 16 an outlet 16.1 is provided. (However, if required both the inlet and the outlet may be provided at either end 14 or end 16).

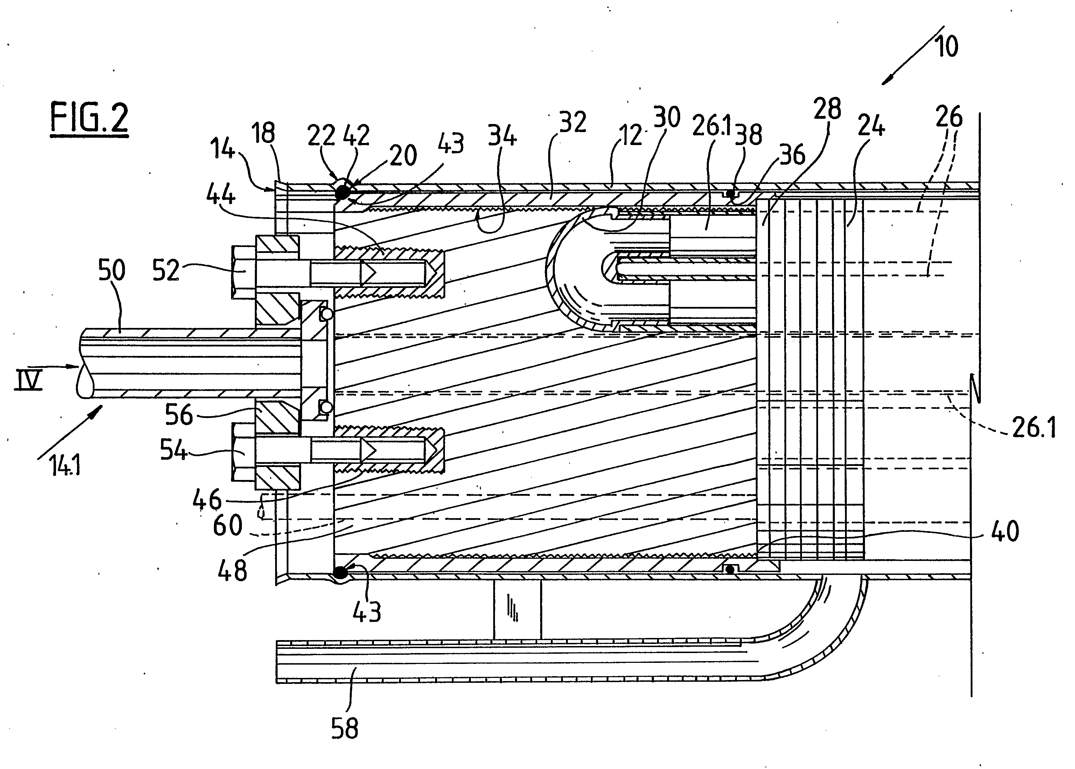

Referring now to Figure 2 an end cap assembly in accordance with the invention and as provided at the end 14 is described. It is to be noted that the other end cap assembly at the end 16 is similar thereto, or, if required, it may be of a different type.

As is shown in Figure 2, the tube 12 is flared outwardly at its end 14 to form a flared-out edge 18. The end 16 is similarly flared-out.

Close to the edge 18 an annular groove 20 is rolled into the housing 12 so as to form an annular exterior bulge 22.

Inside the housing 12 a number of discs 24 are stacked face-to-face. As shown in Figure 6 these discs 24 have holes 25 for the membrane tubes 26. The discs 24 are arranged so that the holes 25 are in allignment for receiving the membrane tubes 26. The membrane tubes 26 extend beyond the last or end disc 28. In practice the discs 24 would be placed individually over the membrane tubes 26 to form a stack of discs 24 with the membrane tubes 26 projecting at both ends of such stack out of the two end discs 28. Thereafter the ends 26.1 of the tubes 26 are joined together by curved end connectors 30. Then the assembly of tubes 26, discs 24 and 28 and connectors 30 are placed into the housing 12.

Although only two tubes 26 are shown in Figure 2, it must be appreciated that the housing 12 is filled with these tubes 26. Furthermore one tube (eg. 26.1) is used as inlet (14.1) and another (not shown) as outlet (16.1), the connection and details of such tubes not being shown further. Therefore the tubes 26 form in effect one continuous elongated tubular passage extending from the inlet 14.1 to the outlet 16.1. (However, if required, there may be a number of inlets and outlets so that a number of elongated passages result, but such passages would obviously, when added together, comprise the same length as a single continuous passage with only one inlet and one outlet).

A tubular bush 32, which has locking means by being grooved or serrated on its internal surface 34, is fitted into the housing 12 by insertion from the end 14. The bush 32 has an outer annular groove 36 for receiving a sealing O-ring 38 between it and the internal surface of the housing 12.

The stepped end 40 of the bush 32 abuts against the end disc 28. When the bush 32 is in position, a circlip 42 is fitted into the groove 20 for abutting against the stepped face end 43 of the bush 32 and holding it in position. (Thereafter the other bush on the opposite end 16 is applied in the same manner and its circlip is forced into position so as to assemble the discs 24, 28 and the membrane tubes 26 tightly in position.)

Two threaded metal inserts 44 and 46 are placed into position by means of a suitable jig.

The space in the housing 12 between the end 14 and the end disc 28 is filled with resin to form a resin casting or plug 48. This is also done at the opposite end 16 of the cylinder 12.

A flanged pipe 50, which is connected to the inlet tube 26.1 of the unit, is connected to the threaded metal inserts 44, 46 for connecting the module to other modules or to the rest of the system. (The same applies to the outlet end 16.1). This is done by having the bolts 52, 54 turned into a loose flange 56 and by fastening the bolts 52, 54 into the metal inserts 44, 46.

The unit 10 has a draining tube 58. The draining tube 58 communicates with the space surrounding the membrane tubes 26 in the discs 24. Alternatively, the draining tube may be embedded in the casting 48 as shown by dotted lines 60.

The bush 32 may be of stainless steel, a suitable thermoplastics material or chrome-plated brass.

The tubular housing 12 may be made of stainless steel or aluminium.

To refurbish a module or unit, an axial force is applied to one epoxy filled bush 32 until the circlip 42 can be removed. The whole assembly is then pressed out of the housing 12. After severing the membrane ·tubes 26, the discs 24, the end discs 28, the housing 12 and the bushes 32 can be re-used after removal of the resin castings 48 by means of machining and/or burning out.

It must be noted that, if required a tubular bush casting arrangement as set out above and as illustrated in the drawings may be provided at only one end of a tubular housing 12, and the other end may be provided with a conventional or another type of end assembly. Such a possibility is also included within the scope of the invention.

**Claims**

1. A membrane tube assembly, which includes a tubular housing (12); a number of membrane tubes (26) suitably located in the housing (12); two end discs (28) with holes, one of each being located some distance from each end (14, 16) of the tubular housing (12) so that the membrane tubes (26) project outwardly through holes provided in both the end discs (28); support means (24) for the membrane tubes (26) in the tubular housing (12) (e.g. support discs (24) with holes (25) for receiving the membrane tubes (26) and packed face to face in the tubular housing (12)); an inlet tube (14.1, 50) leading into at least one membrane tube (26); an outlet tube (16.1, 50) leading into at least one other membrane tube (26); a number of tubular connector bends (30) fitted over the open ends (26.1) of the membrane tubes (26) for joining the membrane tubes (26) into a continuous elongated passage from each inlet tube (14.1) to its associated outlet tube (16.1); and a draining tube (58, 60) connected to the tubular housing (12) and leading into the inner space of the tubular housing (12) outside of the membrane tubes (26), characterized thereby that it further includes two removable tubular bushes (32), one of each being located in each end (14, 16) of the tubular housing (12) and abutting against that end's end disc (28); a resin casting (48) cast into each tubular bush (32) against that end's end disc (28) for embedding the connector bends (30) and parts of the membrane tubes (26) projecting beyond that end's end disc (28); and locking means (20, 22) for locking each tubular bush (32) removably to the tubular housing (12).

2. An assembly as claimed in claim 1, characterized thereby that the locking means (20, 22) is provided as at least one annular groove (20) provided internally in the tubular housing (12) and being adapted to receive a circlip (42) for abutting against the end (43) of the tubular bush (32) located in the housing (12) and facing away from the membrane tubes (26).

3. An assembly as claimed in claim 1 or 2, characterized thereby that a further annular groove (36) is provided in both or either the tubular bush (32) and the tubular housing (12), and at least one sealing ring (38) is located in the groove(s) (36).

4. An assembly as claimed in any one of the preceding claims, characterized thereby that each tubular bush (32) is threaded or serrated (34) internally for locating the resin casting (48) therein.

5. A membrane tube assembly, which includes a tubular housing (12); a number of membrane tubes (26) suitably located in the housing (12); two end discs (28) with holes, one of each being located some distance away from each end (14, 16) of the tubular housing (12) so that the membrane tubes (26) project outwardly through holes provided in both the end discs (28); support means (24) for the membrane tubes (26) in the tubular housing (12) (e.g. support discs (24) with holes (25) for receiving the membrane tubes (26) and packed face to face in the tubular housing (12)); an inlet tube (14.1, 50) leading into at least one membrane tube (26); an outlet tube (16.1, 50) leading into at least one other membrane tube (26); a number of tubular connector bends (30) fitted over the open ends (26.1) of the membrane tubes (26) for joining the membrane tubes (26) into a continuous elongated passage from each inlet tube (14.1) to its associated outlet tube (16.1); suitable closing means (48) at one end of the housing (12) to close off the connector bends (30) and parts of the membrane tubes (26) projecting beyond that end's end disc (28); and a draining tube (50,60) connected to the tubular housing (12) and leading into the inner space of the tubular housing (12) outside of the membrane tubes (26), characterized thereby that it includes a removable tubular bush (32), which removable tubular bush (32) is located in the other end of the tubular housing (12) and abuts against that end's end disc (28); a resin casting (48) cast into the tubular bush (32) against that end's end disc (28) for embedding the connector bends (30) and parts of the membrane tubes (26) projecting beyond that end's end disc (28); and locking means (20, 22) for locking the tubular bush (32) removably to the tubular housing (12).

# FIG.1

# FIG.3

# FIG.6

FIG.2

EP 0 302 960 A1

FIG.5

42

FIG.4

48

50

52

14.1

56

48

12

18

54

60

58

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 062 086 (BAKKE INDUSTRIES LTD.) * claims; pge 6, lines 10-16; figure 2 * | 1,5 | B 01 D 13/00 |
| A | PATENT ABSTRACTS OF JAPAN, vol. 7, no. 232 (C-190)[1377], 14th October 1983; & JP - A - 58 122 005 (TEIJIN K.K.) 20-07-1983 * abstract * | 1,5 | |
| A | US-A-3 485 374 (S. MANJIKIAN et al.) * figures 1, 5; column 2, pages 8-21, 59-71; column 3, pages 1-7 * | 1,5 | |
| A | GB-A-2 056 313 (NITTO ELECTRIC INDUSTRIAL CO. LTD.) * figure 1; page 2, column 1, lines 12-17 * | 1-3,5 | |

TECHNICAL FIELDS
SEARCHED (Int. Cl.4)

B 01 D 13/00

The present search report has been drawn up for all claims

| Place of search | Date of completion of the search | Examiner |
|---|---|---|
| BERLIN | 17-02-1988 | CORDERO ALVAREZ M. |

EPO FORM 1503 03.82 (P0401)